# FASCICULE DE BREVET EUROPEEN

(11) **EP 3 506 691 B1**
(45) Date de publication et mention de la délivrance du brevet: **03.05.2023**
(21) Numéro de dépôt: 18213286.0
(22) Date de dépôt: 18.12.2018
(51) Int. Cl.: H04W 64/00, H04W 84/16

(54) **SYSTÈME DE LOCALISATION LONGUE PORTÉE POUR UTILISATION EN ENVIRONNEMENT CONTRAINT**
LOKALISIERUNGSSYSTEM MIT GROSSER REICHWEITE FÜR DIE BENUTZUNG IN EINER STARK BELASTETEN UMGEBUNG
LONG-RANGE LOCATION SYSTEM FOR USE IN A RESTRICTED ENVIRONMENT

(30) Priorité: 28.12.2017 FR 1701403
(43) Date de publication de la demande: 03.07.2019
(73) Titulaire: Thales, 92400 Courbevoie (FR)
(72) Inventeur: VOILLEQUIN, Cyril, 92622 Gennevilliers Cedex (FR); BERHAULT, Aurélien, 92622 Gennevilliers Cedex (FR); BILLOT, Benoît, 92622 Gennevilliers Cedex (FR)
(74) Mandataire: Atout PI Laplace

(56) Documents cités:
- WO-A1-2019/005703
- WO-A2-2009/009264
- FR-A1- 3 046 900
- KR-B1- 101 762 534
- US-B1- 9 652 955

## Description

L'invention se situe dans le domaine des systèmes de localisation, en particulier ceux visant à connaître, depuis un équipement centralisé de supervision, la position de noeuds dans un environnement donné.

Suivre le déplacement de noeuds de communication mobiles dans un environnement donné peut avoir un intérêt particulier. Sur un site industriel, dans un bâtiment comprenant des zones à accès restreint, dans un hôpital, un navire, etc..., les données de localisation peuvent permettre de surveiller les allées-venues, de contrôler les flux de personnes, de vérifier les autorisations d'accès, de localiser des personnes isolées afin, par exemple, d'en assurer la sécurité en cas d'incident, ou encore de faire un rejeu après enregistrement des positions dans le temps pour analyse. On connait à cet effet la demande de brevet FR 3 046 900, et le brevet US 9.652.955 B1.

Par la suite, on désignera sous le nom de noeud les personnes ou équipements dont la position est recherchée.

La méthode de localisation la plus répandue est la localisation par satellite. Les noeuds utilisent les signaux GNSS (acronyme anglais pour Global Navigation Satellite System) afin de calculer leur position, puis transmettent cette information à un équipement central de supervision par un lien de transmission sans fil, comme par exemple un réseau cellulaire ou un réseau Wi-Fi. Cette méthode pose cependant de nombreux problèmes, le principal étant la fiabilité de la localisation GNSS à l'intérieur de bâtiments.

Ainsi, d'autres méthodes, plus propices à la localisation à l'intérieur de bâtiments, sont connues.

Parmi elles, une première est basée sur la localisation Wi-Fi. Les noeuds se connectent à la borne Wi-Fi la plus proche, qui transmet leurs identifiants à l'équipement de supervision, ce qui permet de les localiser approximativement à partir de la position de la borne Wi-Fi. Cependant, la portée des bornes Wi-Fi étant plutôt importante, la précision de la localisation est alors assez faible. En outre, les émissions Wi-Fi consomment beaucoup d'énergie, les équipements utilisés par les noeuds devant alors être rechargés régulièrement lorsqu'ils sont autonomes.

Une autre solution connue, prenant en compte l'aspect économie d'énergie, consiste à opérer la localisation à partir d'une transmission courte portée. Il existe de nombreuses solutions courte-portée, les plus répandues étant celles basées sur les transmissions Bluetooth, et plus particulièrement celles utilisant la norme Bluetooth v4.0, ou Bluetooth Low Energy (BLE). D'autres solutions existent, comme celles basées sur le protocole Z-Wave, ou même, pour des portées plus réduites, les transmissions NFC (acronyme anglais de Near Field Communications, ou communications en champ proche) ou RFID (acronyme anglais de Radio Frequency Identification, ou identification Radio-Fréquence). Les transmissions courte-portée ont une portée plus faible que les transmissions Wi-Fi, ce qui permet de déterminer la position d'un noeud à l'échelle d'une ou deux pièces seulement. Ainsi, un réseau dense d'émetteurs courte-portée offre une vision très précise de la localisation des noeuds au sein d'un environnement donné. Les balises (en anglais beacon) utilisées pour la localisation courte-portée peuvent être disposées très facilement, sans requérir d'infrastructure particulière, notamment pour leur alimentation car leurs batteries leur permettent d'opérer pendant plusieurs mois ou années sans être rechargés. Cependant, la liaison avec l'équipement de supervision requiert le câblage (le plus souvent un lien Ethernet) de l'ensemble des balises dans l'environnement supervisé, ou l'ajout d'un deuxième lien sans fil avec les balises, tel qu'un lien Wi-Fi. Dans le premier cas (liaison filaire), ce processus demande d'intervenir sur l'infrastructure physique du bâtiment pour installer les balises, ce qui est long, couteux, et peu ouvert aux évolutions. Dans le deuxième cas, la consommation énergétique des balises est revue à la hausse, et nécessite leur connexion à une source de courant. De plus, les transmissions Wi-Fi, de par la gamme de fréquences utilisées (bande ISM à 2.4 GHz ou 5 GHz) et la structure de la forme d'onde multiporteuses, peuvent s'avérer inefficaces dans les environnements de propagation contraints, tels que les sites industriels, les zones mixtes intérieur/extérieur, les bateaux, et plus généralement dans tous les environnements présentant de nombreux obstacles et sources de réflexions du signal : cloisons, parois métalliques, machines, etc... Enfin, l'augmentation du nombre d'émissions Wi-Fi génère des interférences ou une congestion du réseau qui dégradent les bilans de liaisons et la qualité de service.

Ont également été développées des passerelles comprenant deux liens radios : un premier lien vers une pluralité de balises à travers des liens courte-portée, et un deuxième lien vers l'équipement de supervision à travers une transmission sans fil tel qu'une liaison Wi-Fi ou une liaison filaire Ethernet. De telles passerelles sont disposées en plus des balises, et font office de point d'entrée entre l'équipement de supervision et les balises à travers un lien courte-portée, ce qui permet de limiter le nombre d'équipements Wi-Fi venant interférer. Les balises ont alors une faible consommation, ce qui est l'objectif recherché. Cependant, la liaison entre la passerelle et chacune des balises auxquelles elle est reliée étant assurée par la liaison courte-portée, le nombre de passerelle requis est à peine moins important que le nombre de balises courte-portée, et se pose à nouveau le problème de l'infrastructure nécessaire au déploiement de ces passerelles et de leurs interférences.

L'invention cherche à résoudre l'ensemble des problèmes énoncés ci-dessus en proposant un système complet permettant la localisation de noeuds dans un environnement donné qui soit à la fois :
- précis,
- simple et peu coûteux à mettre en oeuvre, et ne nécessite pas d'infrastructure particulière complexe,
- déployable dans des environnements de propagation très contraints, et
- qui permette de gérer une forte densité de noeuds.

A cet effet, l'invention porte sur un système pour la localisation d'au moins un noeud dans un réseau comprenant au moins une balise configurée pour détecter la présence dudit noeud et une passerelle. Dans le système selon l'invention :
- la passerelle et la balise sont configurées pour communiquer en utilisant des transmissions de type Low Power Wide Area Network,
- la passerelle est configurée pour transmettre à la balise des informations de configuration relatives à un multiplexage des transmissions entre la ou les balises et la ou les passerelles du réseau,
- la balise est configurée pour détecter la présence de noeuds du réseau en utilisant des transmissions courte-portée, et pour transmettre des identifiants des noeuds détectés à la passerelle en prenant en compte lesdites informations de configuration.

Dans un mode de réalisation de l'invention, les informations de configuration reçues par la balise comprennent une information relative une heure et une information relative à un instant d'émission. La balise est alors configurée pour émettre à destination de la passerelle, par le biais de la transmission de type Low Power Wide Area Network, dans des intervalles temporels définis par rapport auxdites informations de configuration. De cette manière, un multiplexage temporel des émissions avec les autres balises peut être mis en oeuvre, qui limite ou évite les interférences entre les émissions LPWAN des balises.

Dans un autre mode de réalisation de l'invention, les informations de configuration reçues par la balise comprennent une fréquence d'émission. La balise peut alors utiliser cette fréquence d'émission pour émettre à destination de la passerelle. De cette manière, un multiplexage fréquentiel des émissions avec les autres balises peut être mis en oeuvre, qui limite ou évite les interférences entre les émissions LPWAN des balises.

Les deux modes de réalisation précédents ne sont pas exclusifs.

Avantageusement, les transmissions courte-portée utilisent le standard Bluetooth, et de préférence Bluetooth courte portée.

Avantageusement encore, les transmissions Low Power Wide Area Network utilisent le protocole de communications LoRaWAN.

Dans un mode de réalisation, le système pour la localisation d'au moins un noeud selon l'invention comprend en outre un équipement de supervision. Dans ce cas, la passerelle est configurée pour retransmettre au moins les identifiants des noeuds détectés et un identifiant de la balise ayant réalisé la détection audit équipement de supervision. Pour ceci, la passerelle et l'équipement de supervision peuvent communiquer à travers une liaison Ethernet, ou a travers une liaison sans fil telle qu'une liaison Wi-Fi.

Dans un mode de réalisation du système pour la localisation d'au moins un noeud selon l'invention, la balise est en outre configurée pour transmettre à la passerelle une mesure d'un niveau de puissance ou d'une qualité du signal reçu depuis le noeud.

Avantageusement, les informations de configuration relatives aux transmissions entre la balise et la passerelle sont mises à jour en fonction de la charge du réseau, liée à la répartition des noeuds au sein de la zone supervisée.

L'invention porte également sur une balise pour la localisation d'au moins un noeud dans un système de localisation selon l'invention. La balise comprend :
- des moyens de réception d'un signal transmis par au moins un noeud du système utilisant une transmission courte-portée, et
- des moyens de communication utilisant des transmissions de type Low Power Wide Area Network vers une passerelle du système.

Elle est en outre configurée pour recevoir depuis ladite passerelle des informations de configuration relatives à un multiplexage des transmissions entre la ou les balises et la ou les passerelles du réseau, et à prendre en compte ces informations de configuration pour transmettre des messages à ladite passerelle.

Enfin, l'invention porte sur un procédé pour la localisation d'au moins un noeud dans un réseau comprenant au moins une balise et au moins une passerelle. Le procédé comprend les étapes de :
- transmission, par la passerelle à destination de la balise, d'informations de configuration relatives à un multiplexage des transmissions entre la ou les balises et la ou les passerelles du réseau, en utilisant une transmission de type Low Power Wide Area Network,
- détection, par la balise, de la présence de noeuds du réseau, en utilisant des transmissions courte portée, et
- lorsqu'un noeud est détecté, transmission des identifiants des noeuds détectés à la passerelle en utilisant une transmission de type Low Power Wide Area Network, en prenant en compte lesdites informations de configuration.

### Description

L'invention sera mieux comprise et d'autres caractéristiques et avantages apparaîtront mieux à la lecture de la description qui suit, donnée à titre non limitatif, et grâce aux figures annexées parmi lesquelles :
- La figure 1 présente les principaux éléments constituant un système de localisation selon l'invention ;
- La figure 2 représente un exemple de répartition temporelle et fréquentielle des balises associées à une passerelle, mise en oeuvre dans un mode de réalisation de l'invention ;
- La figure 3 illustre un exemple concret de mise en oeuvre d'un mode de réalisation de l'invention ;
- La figure 4 est une représentation sous la forme d'un diagramme d'état des étapes d'un mode de réalisation du procédé de localisation selon l'invention.

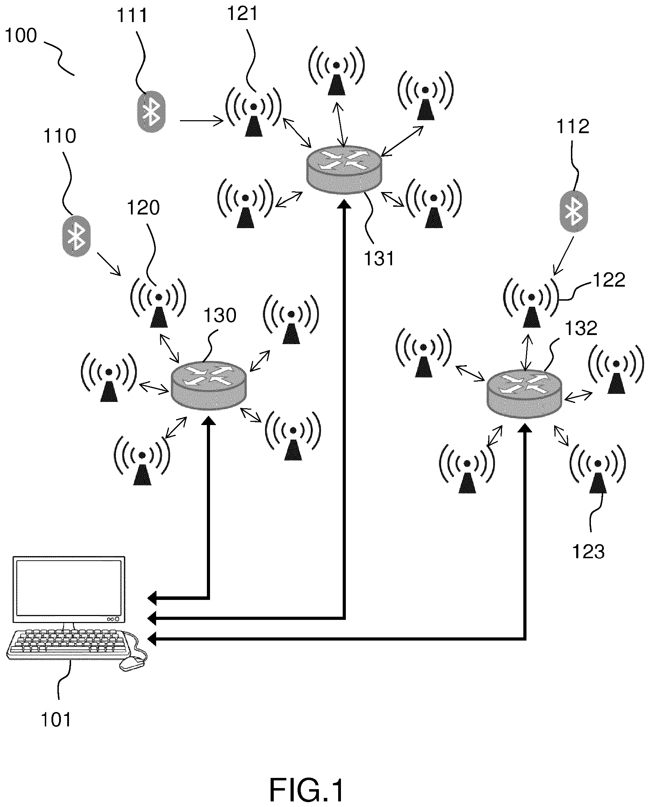

L'invention porte sur un système 100 pour la localisation de noeuds dans un environnement défini, dont les principaux éléments sont décrits dans la figure 1. Dans le système selon l'invention figure un équipement 101 centralisé de supervision de la position d'un ou plusieurs noeuds 110 à 112. A cet effet, le système comprend une ou plusieurs balises 120 à 123, chaque balise étant configurée pour détecter la position des noeuds lorsqu'ils sont dans sa zone de couverture, et une ou plusieurs passerelles 130 à 132, chaque passerelle étant configurée pour retransmettre les données reçues depuis une ou plusieurs balises vers l'équipement de supervision 101.

Les noeuds du système de localisation selon l'invention ne sont pas appairés à une balise ou une passerelle en particulier, mais évoluent sans contraintes au sein de l'environnement. Ils sont détectés localisés lorsqu'ils passent à portée des balises. Pour ceci, les noeuds et balises communiquent en utilisant un standard de communication courte-portée. On entend par courte-portée une portée suffisante pour qu'un noeud et une balise distants de quelques mètres à quelques dizaines de mètres puissent échanger des messages, potentiellement à travers une cloison. Le standard de communication courte-portée utilisé peut par exemple être le standard Bluetooth, dans n'importe quelle version de la norme, et plus particulièrement le standard Bluetooth Low Energy, qui permet aux équipements de pouvoir fonctionner de manière autonome sur batterie pendant plusieurs mois, voire plusieurs années. D'autres standards sont également possibles, comme par exemple l'utilisation du protocole Z-Wave, ou même, pour des portées plus réduites, les transmissions NFC ou RFID.

Selon un mode de réalisation de l'invention, les noeuds du réseau sont utilisés en émission seulement. Ils transmettent constamment, ou des intervalles configurables réguliers, leur identifiant en utilisant la liaison courte portée. Avantageusement, ils peuvent également transmettre diverses informations, comme le niveau de leurs batteries, ou toute autre information utile.

Selon un autre mode de réalisation de l'invention, les noeuds sont configurés pour émettre et recevoir, afin d'échanger des informations avec les balises du réseau, comme par exemple les acquittements des données envoyées ou des informations de configuration.

Les balises sont configurées pour recevoir les données transmises par les noeuds du réseau, et selon le mode de réalisation, pour en émettre, en utilisant le même standard de transmissions courte-portée que les noeuds. Lorsqu'elles sont configurées pour uniquement recevoir sur la liaison courte-portée, leur consommation sur ce lien est extrêmement faible.

Lorsqu'un noeud apparait dans la zone de couverture de la balise, il transmet à la balise son identifiant, et éventuellement les autres informations pertinentes. Avantageusement, les messages transmis sont datés, ce qui permet à l'équipement de supervision d'envoyer en retour des informations aux noeuds par l'intermédiaire des balises qui sont fonction de la date retournée, ou de rejouer à posteriori une mission enregistrée pour une tranche horaire particulière.

Chaque balise est en outre configurée pour communiquer avec une passerelle, afin de lui retransmettre les informations obtenues depuis les noeuds et d'en recevoir des informations de configuration ou de synchronisation. Pour ceci, la passerelle et la balise utilisent une transmission de type « Low Power Wide Area Network », ou LPWAN. Ces transmissions ont été définies pour répondre au besoin posé par l'internet des objets (loT) de longue portée et de faible consommation énergétique.

Il existe plusieurs standards de communication couverts par l'appellation LPWAN, les plus connus étant les protocoles Sigfox (protocole propriétaire déposé UNB - Ultra Narrow Band) et LoRaWAN (acronyme anglais de Long Range Wide-Area Network, ou réseau étendu à longue portée), mais également de nombreux autres tels que NB-Fi (acronyme anglais de Narrowband Fidelity, de WAVIoT), Weightless, RPMA (acronyme anglais de Random Phase Multiple Acces, ou accès multiple à phase aléatoire), LTE-NB (version Narrowband du standard LTE, acronyme anglais de Long Term Evolution) ou LTE-M (version mobile du standard LTE). Les transmissions entre les balises et les passerelles peuvent avoir lieu, selon le mode de réalisation du système de localisation selon l'invention, lorsqu'un noeud entre ou sort de la zone de couverture courte portée de la balise, à intervalles réguliers, ou sur demande de l'équipement de supervision.

Enfin, les passerelles sont reliées à l'équipement de supervision du réseau par un lien pouvant être un lien filaire, comme par exemple une liaison Ethernet, ou un lien sans fil, comme par exemple une liaison Wi-Fi, ou une liaison 2G, 3G, 4G ou 5G s'appuyant sur un réseau cellulaire, permettant ainsi à l'équipement de supervision d'être déporté par rapport au site supervisé. Lorsque la liaison entre les passerelles et l'équipement de supervision s'appuie sur un standard de transmission sans fil tel que le Wi-Fi, il peut être nécessaire d'avoir recours à des relais afin de garantir une portée suffisante de la transmission dans l'environnement de propagation. Utilisant des fréquences porteuses dans des bandes de fréquences différentes, les transmissions LPWAN et Wi-Fi n'interfèrent pas ou peu. De plus, comme décrit par la suite, le nombre de passerelles requises dans le système de localisation est assez faible. Ces dernières, en termes de recouvrement fréquentiel, n'interfèrent alors que très peu entre elles. L'utilisation d'une liaison LPWAN pour les liaisons entre les passerelles et le système de supervision n'est que peu conseillé, ces dernières interférant (concurrence spectrale) avec les liaisons balises-passerelles, et présentant des débits trop faibles pour être utilisables lorsque la passerelle est reliée à un grand nombre de balises. Ce n'est pas le cas pour les transmissions Wi-Fi, qui offrent des débits beaucoup plus importants. La solution LPWAN est cependant valable pour la supervision de zones dans lesquelles le nombre de noeuds supervisés est très faible.

La répartition géographique des passerelles dépend tout d'abord de la portée nécessaire, et donc du choix réalisé concernant la technologie de transmission LPWAN adoptée pour les liaisons passerelles-balises.

Lorsque les passerelles utilisent des transmissions LPWAN pour communiquer avec l'équipement de supervision, il est alors possible d'utiliser des équipements autonomes fonctionnant sur batteries. Dans le cas contraire, elles doivent être raccordées au réseau électrique.

Le choix d'utiliser des liens de communication LPWAN pour assurer les transmissions de messages de petites tailles entre passerelles et balises permet d'assurer une élongation importante, même lorsque les conditions de propagation sont mauvaises ou difficiles avec une bonne capacité de pénétration dans les bâtiments et les zones confinées (sous-sols, coursives, etc.), tout en garantissant une faible consommation et ainsi une grande autonomie, en particulier des balises.

Ces propriétés de propagation longue portée et de faible consommation des transmissions LPWAN sont dues aux caractéristiques suivantes:
- utilisation de bandes de fréquences basses, typiquement inférieures au giga hertz (i.e. bandes ISM 868MHz en Europe, 915MHz aux Etats Unis, etc...), bandes dont les propriétés de propagation sont favorables pour obtenir des liaisons avec de très bonnes élongations en environnement urbain et une bonne capacité de transmission à l'intérieur des bâtiments. En utilisant des fréquences plus basses que les transmissions Wi-Fi (qui utilisent généralement la bande ISM à 2.4 GHz ou 5 GHz), les bilans de liaison sont beaucoup moins impactés en environnement indoor ;
- utilisation de formes d'onde de type monoporteuse, qui, contrairement aux modulations multi-porteuses adoptées par le Wi-Fi, permettent d'utiliser des amplificateurs de puissance des chaînes radio au plus près de leur zone de saturation, et donc de favoriser le bilan énergétique des émetteurs ;
- utilisation de formes d'onde robustes aux interférences entre symboles liées aux réflexions dans les bâtiments, contrairement aux modulations multiporteuses, très sensibles à l'interférence entre symboles dès lors que l'égalisation n'est pas parfaite,
- utilisation de techniques d'étalement de spectre à séquence directe, permettant la bonne réception des données même pour des niveaux très faibles de rapport signal à bruit.

Ces caractéristiques permettent aux transmissions LPWAN de bénéficier de bilans de liaison très favorables, et donc d'émettre à de très faibles niveaux sur des portées importantes (la portée théorique d'une liaison LoRa est de l'ordre de 2 à 7 km en environnement urbain). En pratique, les équipements implémentant des transmissions de type LPWAN peuvent fonctionner sur batteries pendant plusieurs années sans être rechargés, ce qui permet aux balises dans les système de localisation selon l'invention, et aux passerelles selon le mode de réalisation implémenté, de pouvoir être totalement autonomes, et donc très facilement installées.

Les bonnes performances en termes de propagation et de consommation des transmissions utilisant les technologies LPWAN a cependant deux inconvénients.

Le premier inconvénient est que le débit qu'elles offrent est très faible (typiquement inférieur voire très inférieur à 10kbits/sec). Dans le cadre d'un système de localisation selon l'invention, cet inconvénient n'en est pas un, car les données transportées ne nécessitent pas de débits importants. Les messages transmis entre les balises et passerelles comprennent les identifiants des utilisateurs détectés par la balise, et éventuellement quelques informations diverses. Ainsi, la transmission de paquets de données de quelques dizaines ou centaines d'octets est suffisante, ce qui rend l'application compatibles de l'utilisation de transmissions LPWAN sur ce lien.

Le deuxième inconvénient est que les transmissions LPWAN ont été initialement conçues pour répondre aux besoins dans le domaine de l'internet des objets, et ont été conçues pour des communications réalisées de manière épisodiques. Un exemple d'application typique envisagée à l'origine est celui d'un compteur électrique connecté envoyant à un central des informations sur la consommation courante deux ou trois fois par jour, ou d'un système de géolocalisation d'un véhicule, émettant sur requête seulement. Ainsi, les modems Sigfox ont été conçus dans le but d'assurer un maximum de 6 messages/heure.

De telles transmissions ne sont pas conçues pour des réseaux comprenant un grand nombre d'équipements émettant à des fréquences soutenues. Elles tolèrent très mal les collisions lorsque plusieurs messages sont transmis simultanément dans un même canal fréquentiel. Par exemple, pour le protocole LoRaWAN, la gestion des collisions lorsque les équipements fonctionnent dans des modes où les paquets transmis sont acquittés, consiste en l'implémentation d'un protocole ALOHA, pour retransmettre les paquets non acquittés après un temps d'attente aléatoire. Ces réémissions augmentent le nombre d'émissions interférentes, et pénalisent d'autant plus l'ensemble des transmissions du réseau, dégradant fortement la qualité de service à cause des nombreuses pertes de messages.

La probabilité que deux émissions interfèrent augmente très rapidement lorsque le nombre d'émissions LPWAN augmente, c'est-à-dire lorsque le nombre de balises augmente. Les transmissions LPWAN ne sont donc *a priori* pas adaptées pour une utilisation dans le contexte d'un système de localisation comprenant un grand nombre de balises susceptibles d'échanger de nombreux messages avec les passerelles.

L'invention propose de résoudre ce problème en organisant les émissions réalisées depuis les balises vers les passerelles. Ainsi, les collisions sont évitées, permettant ainsi la coexistence d'un grand nombre de balises tout en garantissant une qualité de service optimum.

A cet effet, dans le système de localisation de noeuds selon l'invention, les passerelles sont configurées pour transmettre à chacune des balises auxquelles elles sont connectées, des informations de configuration relatives aux transmissions LPWAN échangées entre la balise et la passerelle. Plusieurs modes de réalisation sont possibles.

Dans un mode de réalisation d'un système de localisation selon l'invention, les passerelles organisent les émissions des balises de manière à ce qu'elles soient réparties dans le temps, à la manière d'un accès multiple temporel TDMA (acronyme anglais de Time Division Multiple Access). L'objectif est de définir une trame temporelle, commune à toutes les balises, dans lesquelles figurent des intervalles temporels qui sont attribués aux balises successivement de manière à limiter leurs interférences.

Pour ceci, la passerelle transmet à chacune des balises une information concernant une heure, donnée par une horloge interne à la passerelle, ou récupérée depuis l'équipement de supervision, ainsi que des informations sur une trame de multiplexage temporel et un créneau temporel dans cette trame utilisable par la balise pour ses émissions vers la passerelle.

L'heure représente une heure système, dont la précision dépend de la précision recherchée.

Les informations sur la trame de multiplexage temporel comprennent toutes les informations nécessaires pour que la balise puisse calculer les heures auxquelles elle peut émettre vers la passerelle, comme par exemple la durée de la trame de multiplexage temporel, le nombre d'intervalles qui la composent, une heure de début de trame et un indice d'intervalle temporel attribué à la balise dans la trame. Ainsi, la balise synchronise une horloge interne à l'heure transmise par la passerelle, calcule la position du prochain intervalle temporel qui lui est attribué, et utilise cet intervalle temporel pour ses émissions vers la passerelle. De cette manière, toutes les balises sont synchronisées sur une heure commune, l'heure système, ce qui permet de mettre en oeuvre le multiplexage temporel et d'éviter les interférences entre balises émettant en LPWAN.

Dans un mode de réalisation de l'invention, certain des paramètres de multiplexage temporel sont configurés dans une mémoire des balises, et n'ont alors pas à être transmis par la passerelle. C'est le cas par exemple pour la durée de la trame de multiplexage temporel, le nombre d'intervalles qui la composent, et l'heure de début de trame. La passerelle se contente alors de transmettre l'heure système à la balise, afin de compenser une dérive de son horloge interne, et de lui indiquer les intervalles temporels qui lui sont assignés. Le risque de collisions de messages est alors réduit en proportion du nombre d'intervalles temporels de la trame de multiplexage.

L'heure système est, lors de sa réception par une balise, entachée d'une erreur liée au temps de propagation entre la passerelle et la balise, ainsi qu'au temps nécessaire pour moduler et envoyer le signal dans la passerelle, le recevoir, le démoduler et l'interpréter dans la balise.

Avantageusement, la passerelle et la balise peuvent alors mettre en oeuvre un mécanisme de synchronisation temporelle fine, consistant à échanger une série de messages datés afin d'aligner finement l'heure de la balise sur l'heure de la passerelle. Ces mécanismes de synchronisation temporelle fine sont bien connus de l'homme du métier.

A défaut, la trame de multiplexage temporel peut comprendre des intervalles de garde prévus pour compenser les erreurs dans l'heure utilisée par la balise, ainsi que pour compenser les dérives de l'horloge de la balise. Les mécanismes de synchronisation fine et d'intervalles de garde peuvent être associés.

Dans un autre mode de réalisation d'un système de localisation selon l'invention, les passerelles organisent les émissions des balises de manière à ce qu'elles se répartissent dans différents canaux fréquentiels, à la manière d'un accès multiple fréquentiel FDMA (acronyme anglais de Frequency Division Multiple Access). En effet, les bandes de fréquences considérées sont généralement découpées en une pluralité de canaux fréquentiels. C'est le cas par exemple pour le protocole LoRaWAN dans la bande basse ISM. En Europe, cette bande couvre les fréquences 863 MHz à 870 MHz. Selon les configurations, elle peut être découpée en 14 canaux de 500 kHz, 28 canaux de 250 kHz ou 56 canaux de 125 kHz. Les passerelles organisent alors les émissions des balises en répartissant ces canaux fréquentiels, ce qui a pour effet de diminuer le risque de collisions de messages en proportion du nombre de canaux utilisés.

Pour ceci, la passerelle transmet aux balises qui lui sont affiliées une information de configuration sous la forme d'un numéro de canal fréquentiel à utiliser. La balise utilise ce canal pour toutes ses transmissions à destination de la passerelle.

Dans un autre mode de réalisation d'un système de localisation selon l'invention, les passerelles organisent les émissions des balises selon un multiplexage à la fois temporel et fréquentiel.

La passerelle transmet à chacune des balises qui lui sont associées des informations de configuration relatives à ses transmissions, ces informations comprenant une heure système et des informations sur une trame de multiplexage temporel comprenant au moins un créneau temporel dans cette trame, et des informations concernant un canal fréquentiel.

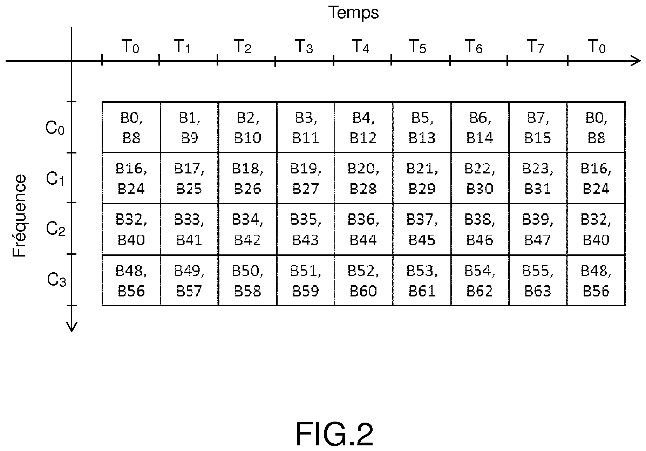

La figure 2 représente un exemple de répartition temporelle et fréquentielle des balises associées à une passerelle, mise en oeuvre dans un mode de réalisation de l'invention. Dans cet exemple simple, 64 balises sont associées à une même passerelle, les balises étant numérotées B0 à B63. Sans mise en oeuvre d'une répartition temporelle et fréquentielle entre les balises, à chaque instant, jusqu'à 64 balises sont susceptibles d'interférer, rendant ainsi impossible les remontées d'informations vers les passerelles.

Dans cet exemple simple, donné pour illustrer les grands principes de l'invention, les transmissions entre les balises et la passerelle sont réparties sur quatre canaux fréquentiels C0 à C3. La trame de multiplexage temporel est divisée en huit intervalles temporels TO à T7. Chaque case temporelle/fréquentielle peut être utilisée par deux balises parmi les 64. Par exemple, le canal C0 associé à l'intervalle temporel TO est partagé par les balises B0 et B8. De cette manière, à un instant donné, seules ces deux balises peuvent interférer, contre 64 sans mise en oeuvre de l'invention. De telles interférences sont alors acceptables.

C'est cette répartition homogène de la charge sur les ressources temporelles et fréquentielles dont dispose le réseau, qui va garantir sa qualité de service, même lorsque la densité du réseau augmente.

Afin de transmettre les informations de configuration aux balises, la passerelle peut réserver une ou plusieurs ressources temporelles/fréquentielles dans le schéma de multiplexage, ou utiliser un canal de ralliement spécifiquement dédié à cet effet.

En pratique, la durée de la trame de multiplexage et les allocations d'intervalles sont agencées en fonction de la charge du réseau, de manière à ce que chaque balise puisse émettre suffisamment régulièrement pour transmettre l'ensemble des informations concernant les noeuds détectés.

Le système de localisation selon l'invention peut être déployé très simplement. Les passerelles doivent être réparties de manière à ce que l'ensemble du site à superviser puisse être atteint par les transmissions réalisées en utilisant une technologie LPWAN donnée. Les passerelles sont reliées à l'équipement central de supervision, et lui remontent les informations sur les noeuds détectés dont elles disposent. Les transmissions entre passerelles et équipement de supervision peuvent se faire de manière régulière, sur demande de l'équipement de supervision, ou lorsqu'un évènement se produit sur le réseau.

Dans un mode de réalisation de l'invention, l'équipement de supervision entretient une horloge, utilisée comme heure système afin de synchroniser les émissions des balises. Lorsque le réseau ne comprend qu'une seule passerelle, ou lorsque les passerelles utilisent des ressources fréquentielles distinctes, l'heure utilisée par les balises peut alors être donnée par une l'horloge de la passerelle à laquelle elles sont affiliées, car il n'est alors pas nécessaire d'assurer la synchronisation des balises associés à des passerelles différentes.

Dans un mode de réalisation de l'invention, l'équipement de supervision attribue des canaux fréquentiels aux passerelles en fonction de leur position, de manière à éviter que des cellules couvertes par des passerelles adjacentes utilisent des mêmes ressources fréquentielles. Ceci permet d'éviter les interférences entre balises associées à des passerelles distinctes utilisant les mêmes ressources fréquentielles. Des méthodes d'allocation de fréquences par coloration de graphes peuvent être mises en oeuvre à cet effet. Dans un autre mode de réalisation de l'invention, les canaux attribués aux passerelles sont programmés au niveau de chaque passerelle, soit par des moyens matériels, soit par des moyens logiciels.

Les balises sont ensuite déployées sur les zones d'intérêt du site. Elles ne nécessitent pas d'infrastructure particulière pour fonctionner (alimentation et communication), car elles utilisent d'une part une technologie de transmission faible consommation de type LPWAN pour les échanges avec les passerelles auxquelles elles sont affiliées, et d'autre part une technologie de transmission faible consommation courte portée avec les noeuds. Elles peuvent alors fonctionner de manière autonome sur batteries.

Chaque balise est associée à une passerelle, qui lui transmet les informations concernant la configuration des transmissions à utiliser lors de l'envoi de messages à la passerelle. Ces informations de configuration peuvent être transmises une unique fois, lors de l'installation de l'équipement, ou plus régulièrement. En particulier, pour les modes d'implémentation impliquant un multiplexage temporel des balises, la fréquence de transmission de l'heure système doit prendre en compte la stabilité des horloges des balises.

L'association d'une balise à une passerelle peut être réalisée soit de façon statique avant le déploiement sur site, soit dynamiquement au moment du déploiement et de l'installation sur site. Dans le cas d'une configuration statique, une table de correspondance est chargée dans chaque passerelle qui connait de ce fait d'avance les balises qui lui seront rattachées. Ce mode opératoire simple nécessite de connaître d'avance et très précisément l'emplacement de chaque balise par rapport à chaque passerelle. Dans le cas d'une configuration dynamique, l'association est réalisée par le superviseur qui fournit la configuration d'allocation des balises à chaque passerelle en fonction du déploiement qui a été réalisé.

Les informations de configuration concernant la configuration des transmissions des balises vers les passerelles peuvent également être envoyées dès qu'un besoin de reconfiguration du réseau existe, comme cela peut être le cas lorsqu'un nouvel équipement entre dans le réseau (passerelle, balise) ou pour équilibrer la répartition de la charge dans le réseau. En effet, lorsque la répartition géographique des noeuds est inégale, les équipements du réseau n'ont pas tous les mêmes besoins en bande passante. Dans ces cas là, l'invention permet d'adapter en temps réel la topologie du réseau à la charge utile, en attribuant plus ou moins de canaux fréquentiels et/ou d'intervalles temporels aux équipements les plus chargés.

Enfin, les informations de configuration des émissions LPWAN des balises peuvent être modifiées régulièrement de manière à faire varier les allocations de canaux fréquentiels attribués aux balises au cours du temps. En effet, l'Autorité de Régulation des Communications Electroniques et des Postes (ARCEP), autorité en charge de la régulation des communications électroniques en France, fixe une limite d'utilisation des canaux ISM dans la bande des 868 MHz à 1 % du temps (ou 10% dans la bande des 139 MHz). Les balises peuvent alors être configurées pour changer régulièrement de canal, afin d'augmenter leur capacité d'émission tout en respectant les contraintes définies par l'ARCEP.

Le fonctionnement du système de localisation selon l'invention est le suivant :
- les noeuds émettent continuellement ou régulièrement un message en utilisant une transmission courte portée comme par exemple une transmission BLE. Le message transmis comprend un identifiant du noeud, et peut avantageusement comprendre d'autres informations telles que le niveau de ses batteries.
- les balises du réseau sont en écoute permanente. Lorsqu'un noeud entre dans la zone de couverture d'une balise, celle-ci détecte sa présence par le biais de la liaison courte-portée. Elle récupère alors l'identifiant du noeud, et le cas échéant les autres informations transmises. Les échanges entre la balise et le noeud détecté peuvent ensuite être réalisés régulièrement, afin de s'assurer que le noeud est toujours dans la zone de couverture de la balise.
- La balise transfère à la passerelle à laquelle elle est affiliée l'ensemble des informations récupérées auprès du noeud par le lien radio LPWAN. Elle peut avantageusement les compléter avec d'autres informations pertinentes, comme par exemple l'état de ses batteries, ou des mesures diverses comme le nombre de noeuds détectés, des mesures de température ou d'hygrométrie, des besoins en bande passante, des données de configuration, de maintenance, etc...

- La passerelle retransmet ces informations à l'équipement de supervision, associé à un identifiant de la balise ayant détecté la présence du noeud. L'équipement de supervision opère alors une correspondance entre l'identifiant de la balise et sa position. Il peut donc déterminer, à la portée de la liaison courte-portée près, la position du noeud.
- Lorsqu'un noeud sort de la zone de couverture d'une balise, celle-ci peut en avertir la passerelle, qui retransmet l'information à l'équipement de supervision.

Avantageusement, les balises, passerelles et/ou équipement de supervision, peuvent contenir une liste des identifiants de noeuds autorisés dans le réseau, et être configurées pour bloquer les messages transmis depuis des noeuds qui ne feraient pas partie de ce réseau. Dans le cas où le filtrage est réalisé au niveau de la passerelle ou de la balise, cette liste peut lui être transmise par l'équipement de supervision.

Un noeud peut être détecté par plusieurs balises simultanément. Cela peut être le cas par exemple dans un navire ou un immeuble, lorsque des balises sont positionnées plus ou moins l'une au dessus de l'autre à des étages différents. Afin de déterminer la balise la plus pertinente, les balises peuvent être configurées pour transmettre, en plus de l'identifiant du noeud détecté, une mesure de puissance ou de qualité du signal reçu, telle qu'une mesure de RSSI (Rapport Signal Sur Interféreur) ou de RSB (Rapport Signal à Bruit). A partir de cette mesure de la qualité du signal reçu, la balise la plus proche, et donc la position la plus probable du noeud, peut être déterminée.

Le multiplexage des transmissions opérées depuis les balises, qu'il soit temporel ou fréquentiel, est donc un point clé de l'invention. Il permet d'éviter les interférences entre balises, et donc de rendre possible l'utilisation de nombreuses transmissions basées sur des technologies LPWAN, pour opérer les liaisons entre les passerelles et les balises.

S'agissant de communications longue portée, l'invention est alors compatible d'environnements de propagation fortement contraints, comme par exemple les bâtiments industriels ou les navires. Les passerelles servent de point d'accès entre les balises et l'équipement de supervision. L'utilisation de technologies de type LPWAN s'insère parfaitement dans ce type de réseau, les architectures LPWAN étant conçues à l'origine pour des topologies de réseau en étoile. La passerelle joue un rôle comparable à celui d'un hub.

De part la faible consommation des transmissions choisies, les balises, et selon le mode de réalisation, les passerelles, peuvent fonctionner de manière autonome sur batteries. Ils ne nécessitent alors pas d'infrastructure d'alimentation dédiée, ce qui leur permet de pouvoir être déployés, remplacés et reconfigurés très facilement.

Le mécanisme de multiplexage temporel et/ou fréquentiel est mis en oeuvre à partir des passerelles. Ce sont elles qui indiquent aux différentes balises les configurations qu'elles doivent employer dans le cadre des transmissions LPWAN entre la balise et la passerelle.

Lorsque le réseau ne comprend qu'une seule passerelle, celle-ci peut utiliser l'ensemble des ressources fréquentielles du réseau. Elle distribue alors aux balises des informations concernant un multiplexage temporel et/ou fréquentiel des ressources, calculé par la passerelle ou l'équipement de supervision, de manière à éviter les interférences.

Lorsque le réseau comprend plusieurs passerelles, les différents cas suivants sont possibles :
- l'équipement centralisé de supervision attribue des canaux fréquentiels distincts aux passerelles, de préférence calculés en prenant en compte la position des passerelles par un procédé d'allocation de fréquences par coloration de graphes afin d'éviter les interférences, puis chacune des passerelles distribue aux balises des informations sur les canaux fréquentiels qu'elle peut utiliser, le cas échéant associées à des informations relatives à un multiplexage temporel, ces informations étant calculées par la passerelle ou l'équipement de supervision, ce qui ne requiert pas la connaissance de la position des balises ;
- tous les canaux fréquentiels sont attribués à toutes les passerelles. L'équipement de supervision distribue alors des intervalles temporels aux passerelles de manière à éviter les interférences, de préférence en prenant en compte la position des passerelles. Chaque passerelle attribue alors des créneaux temporels et/ou fréquentiels aux différentes balises qui lui sont affiliées, ces ressources étant calculées par la passerelle ou l'équipement de supervision, ce qui ne nécessite pas la connaissance de la position des balises.

Les équipements permettant la mise en oeuvre d'un système de localisation selon l'invention sont les suivants :
- équipement de supervision : l'équipement de supervision peut être un ordinateur ou un serveur comprenant :
   ∘ une mémoire, pour stocker un ou plusieurs parmi :
      ▪ des tables de correspondance entre des identifiants des balises du réseau et leur position géographique, afin de localiser les noeuds à partir des identifiants des balises les ayant détectés,
      ▪ des tables d'utilisateurs, afin de faire une correspondance entre l'identifiant d'un noeud et une personne ou un équipement, et de chercher à localiser un ou plusieurs noeuds, ou des groupes de noeuds,
      ▪ les positions des passerelles, afin de calculer, selon le mode de réalisation, des informations concernant un multiplexage temporel et/ou fréquentiel des transmissions entre les balises et les passerelles,
      ▪ les positions des noeuds, associées si possible à un élément de datation, afin de pouvoir retrouver *a posteriori* la position des noeuds du réseau,
   ∘ de moyens de calculs, lui permettant de calculer, lorsque c'est nécessaire, les informations concernant le multiplexage temporel et/ou fréquentiel,
   ∘ d'une horloge, lorsqu'un multiplexage temporel est mis en oeuvre sur la base d'une heure partagée par tous les acteurs du réseau,
   ∘ des moyens d'affichage, permettant de visualiser la position des noeuds et l'ensemble des informations pertinentes,
   ∘ une connexion filaire (par exemple Ethernet) ou sans fil (par exemple Wi-Fi ou cellulaire) vers la ou les passerelles, afin de récupérer les informations concernant les noeuds détectés.
- Les passerelles peuvent être des boitiers comprenant :
   ∘ une connexion filaire ou sans fil vers l'équipement de supervision, afin de récupérer des informations de configuration des transmissions avec les balises (canaux fréquentiels et/ou intervalles temporels),
   ∘ une connexion pour échanger des données par une transmission de type LPWAN avec une ou plusieurs balises en parallèle, afin de récupérer les informations de présence des noeuds du réseau, et selon le mode de réalisation,
   ∘ des moyens de calcul, pour calculer des informations relatives à une configuration des émissions,
   ∘ une mémoire, pour filtrer des identifiants de noeuds,
   ∘ une interface de configuration.
- Les balises peuvent être des boitiers comprenant :
   ∘ une connexion pour échanger des données par une transmission de type LPWAN avec une passerelle, pour récupérer des informations de configuration des émissions LPWAN et transmettre les informations de présence des noeuds du réseau,
   ∘ une connexion pour détecter et recevoir des informations de présence depuis des noeuds par une transmission courte-portée,
   ∘ des moyens de calcul, pour paramétrer les émissions LPWAN à partir des informations de configuration des émissions reçues, et selon le mode de réalisation
   ∘ une interface de configuration.
- Les noeuds sont des émetteurs émettant en continu ou à intervalles réguliers un signal selon un mode de transmission courte-portée. De tels émetteurs sont répandus dans le marché. Il peut s'agir de smartphones, dongles, tags, badges, bracelets, etc... en mode push. Ils peuvent également comprendre des capteurs, tels qu'un accéléromètre, afin de corréler l'information de position avec une information de déplacement.

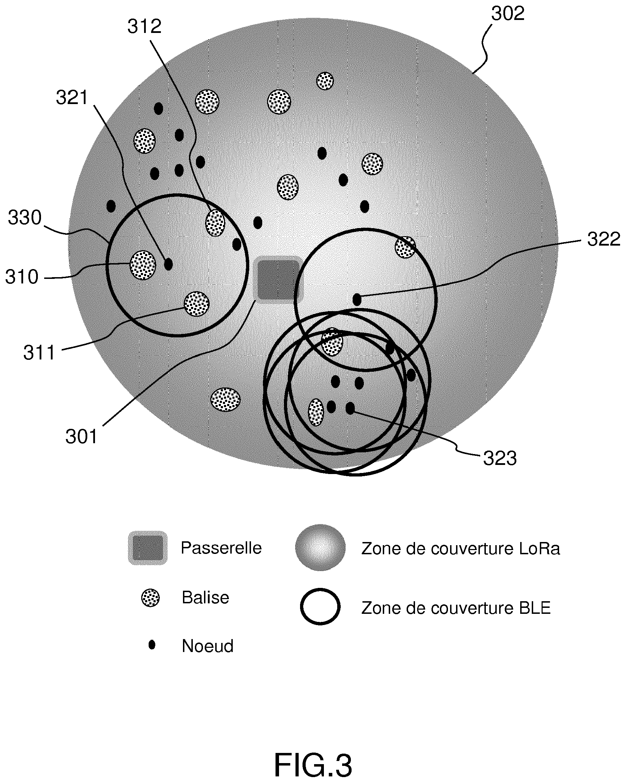

La figure 3 illustre un exemple concret de mise en oeuvre d'un mode de réalisation de l'invention. Dans l'exemple de la figure 3, une passerelle 301 permet de couvrir une zone géographique par une liaison LPWAN telle qu'une liaison LoRaWAN. Dans cette zone géographique 302 figurent une pluralité de balises telles que la balise 310, la balise 311 ou la balise 312. Ces balises sont réparties dans la zone 302, ce qui leur permet de pouvoir communiquer avec la passerelle 301. Les balises sont configurées pour détecter la présence de noeuds en utilisant une liaison courte portée, dans le cadre de l'exemple de la figure 3, des liaisons BLE.

Les noeuds du réseau, parmi lesquels le noeud 321, le noeud 322 ou le noeud 323, émettent en utilisant la liaison courte-portée, dans le cadre de l'exemple la liaison BLE. La zone 330 représente la zone couverte par l'émission BLE du noeud 321. Cette zone comprend les balises 310, 311 et 312, qui vont toutes trois détecter la présence du noeud 321. Pour connaître plus précisément la position du noeud 321, des mesures de la puissance du signal reçu, de SNR ou de RSSI peuvent être réalisées, afin de connaître la balise la plus proche du noeud, et donc la pièce ou la zone dans laquelle se trouve le noeud. Avantageusement, les mesures de puissance, RSSI ou SNR peuvent être utilisées afin déterminer la position du noeud par trilatération.

L'invention permet de mettre en oeuvre un très grand nombre de noeuds avec un nombre très faible de passerelles. Dans la suite sont décrits deux cas d'applications donnés à titre d'illustration seulement.

Dans le premier cas d'application, le système de localisation selon l'invention comprend une passerelle unique, à laquelle sont affectés l'ensemble des 28 canaux de 250 kHz de la bande basse ISM 868 MHz.

La passerelle met en place un mécanisme de gestion des interférences entre les signaux LPWAN par le biais d'un multiplexage temporel. Pour ceci, une trame TDMA comprenant 6 intervalles temporels est définie. La passerelle alloue ensuite chacune des cases composée d'un intervalle temporel associé à un canal fréquentiel à une unique balise. La passerelle peut donc gérer jusqu'à 168 balises sans aucune collision, quand une passerelle Wi-Fi n'aurait été en mesure de ne gérer qu'une vingtaine d'utilisateurs, aurait eu une couverture moins importante, et aurait consommé beaucoup plus d'énergie. Les contraintes matérielles pesant sur les passerelles sont également très faibles, celles-ci n'ayant pas, dans ce cas d'application, à gérer de réception simultanées depuis plusieurs passerelles.

Dans le deuxième cas d'application donné à titre d'illustration, le système de localisation selon l'invention comprend quatre passerelles. Un total de sept canaux fréquentiel parmi les 28 canaux de 250 kHz de la bande basse ISM est attribué à chaque passerelle. Comme dans le premier cas d'application, chaque passerelle met en place un mécanisme de gestion des interférences par multiplexage temporel dans lequel la trame de multiplexage comprend 10 intervalles temporels. Chaque passerelle peut donc attribuer 70 cases composées d'un intervalle temporel associé à un canal fréquentiel. En attribuant chacune de ces cases à 2 utilisateurs, chaque passerelle peut gérer jusqu'à 140 balises. Le système peut donc supporter jusqu'à 560 balises pour un niveau d'interférences très faibles, une même ressources temporelle et fréquentielle pouvant être utilisée simultanément par au maximum deux balises. Les contraintes matérielles pesant sur les passerelles sont également très faibles, celles-ci n'ayant dans ce cas d'application qu'à gérer un maximum de deux réceptions en parallèle.

Dans ce deuxième cas d'application, en considérant que chaque balise transmette des données à la passerelle au rythme moyen de 1 à 2 kbits/seconde, le débit moyen pesant sur le lien reliant la passerelle à l'équipement de supervision est alors de quelques centaines de kilobits par seconde. Ces débits sont très inférieurs à ceux offerts par des connexions sans fil Wi-Fi.
L'invention permet donc de mettre en oeuvre un système de localisation présentant les avantages suivants :
- possibilité de déploiement dans les environnements de propagation contraints, de par l'utilisation de transmissions de type LPWAN, en particulier LoRa ayant de très bonnes propriétés de propagation même à l'intérieur des bâtiments,
- possibilité de gérer de fortes densités de balises courte-portée, ce qui permet d'avoir une localisation précise et de couvrir une zone importante, grâce au système de passerelles interposées entre l'équipement de supervision et les balises, et au mécanisme de gestion des interférences entre émissions LPWAN,
- faible densité des passerelles, grâce aux bonnes propriétés de propagation des transmissions LPWAN,
- basse consommation des équipements, en particulier des balises, qui utilisent deux transmissions faible consommation : une transmission LPWAN et une transmission courte-portée, et peuvent ainsi fonctionner sur batteries,
- réseau déployable rapidement à l'aide de composants (les balises et selon le mode de réalisation les passerelles) ne nécessitant pas de modification de l'infrastructure, qu'il s'agisse de connexion de communication (i.e. Ethernet) ou de connexion électrique (alimentation),
- forte reconfigurabilité, permettant d'adapter la répartition des ressources à la charge du réseau,
- forte capacité d'extension de la zone de couverture ou de la densification des balises sans affecter les performances de localisation ni la réactivité du système,
- utilisant des équipements existants, en particulier en ce qui concerne les noeuds du réseau, disponibles à des tarifs compétitifs,
- utilisant des technologies existantes, en particulier en ce qui concerne les balises et les passerelles, pouvant être réalisées facilement en intégrant des chipsets offrant des solutions de communication courte-portée et LPWAN existant, disponibles à des tarifs compétitifs,
- utilisant la bande de fréquence ISM 868 MHz (mais pouvant utiliser n'importe quelle autre bande de fréquence), aux bonnes propriétés de propagation et gratuite.

L'invention porte également sur une balise utilisable dans un système selon l'invention, pouvant communiquer d'une part avec des noeuds du réseau à l'aide d'une transmission courte-portée, et d'autre part avec une passerelle à l'aide d'une transmission basée sur une technologie LPWAN. La balise selon l'invention est configurée pour recevoir, depuis la passerelle, des informations de configuration relatives aux transmissions qu'elle adresse à la passerelle en utilisant ses capacités de transmission LPWAN, et à prendre en compte ces informations de configuration pour planifier ses transmissions.

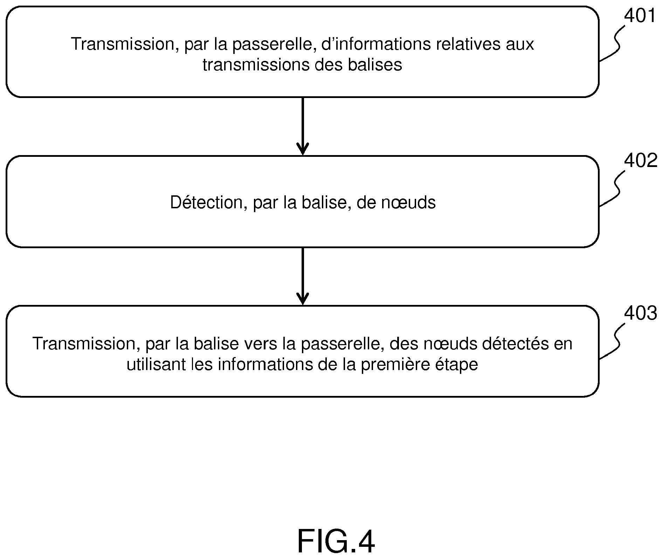

Enfin, l'invention porte sur un procédé de localisation d'au moins un noeud dans un réseau selon l'invention. La figure 4 est une représentation sous la forme d'un diagramme d'état des étapes d'un mode de réalisation du procédé de localisation selon l'invention, dans un réseau comprenant au moins une passerelle, au moins une balise et au moins un noeud.

Le procédé comprend tout d'abord une première étape 401 de transmission, par la passerelle à destination de chacune des balises qui lui sont affiliées, d'informations configuration relatives aux transmissions entre la balise et la passerelle. Ces informations se rapportent aux paramètres nécessaires à la mise en oeuvre d'un multiplexage temporel et/ou fréquentiel par la balise. Elles sont transmises par le biais d'un lien radio utilisant une technologie de type LPWAN entre la passerelle et la balise.

Le procédé comprend ensuite une deuxième étape 402, réalisée par la balise, dans laquelle cette dernière cherche à détecter la présence d'un noeud du réseau grâce à sa capacité de communications courte-portée.

Enfin, le procédé comprend une troisième étape 403, réalisée par la balise lorsqu'un noeud est détecté au cours de la deuxième étape 402. Cette étape comprend la récupération d'un identifiant du noeud détecté à travers la liaison courte-portée, et sa transmission à la passerelle en utilisant le lien radio LPWAN, en utilisant les ressources temporelles et/ou fréquentielles qui lui ont été communiquées par la passerelle lors de l'étape 401.

## Revendications

1. Système pour la localisation d'au moins un noeud (110) dans un réseau comprenant au moins une balise (120) configurée pour détecter la présence dudit noeud et une passerelle (130), dans lequel :
- la passerelle et la balise sont configurées pour communiquer en utilisant des transmissions de type Low Power Wide Area Network,
- la balise est configurée pour détecter la présence de noeuds du réseau en utilisant des transmissions courte-portée,
le système étant **caractérisé en ce que** :
- la passerelle est configurée pour transmettre à la balise des informations de configuration relatives à un multiplexage des transmissions entre la ou les balises et la ou les passerelles du réseau,
- la balise est configurée pour transmettre des identifiants des noeuds détectés à la passerelle en prenant en compte lesdites informations de configuration.

2. Système pour la localisation d'au moins un noeud selon la revendication 1, dans lequel les informations de configuration comprennent une information relative à une heure et une information relative à un instant d'émission.

3. Système pour la localisation d'au moins un noeud selon la revendication 2, dans lequel la balise émet à destination de la passerelle dans des intervalles temporels définis par rapport auxdites informations de configuration.

4. Système pour la localisation d'au moins un noeud selon l'une des revendications précédentes, dans lequel lesdites informations de configuration comprennent une fréquence d'émission.

5. Système pour la localisation d'au moins un noeud selon la revendication 4, dans lequel la balise utilise ladite fréquence d'émission pour émettre à destination de la passerelle.

6. Système pour la localisation d'au moins un noeud selon l'une des revendications précédentes, dans lequel les transmissions courte-portée utilisent le standard Bluetooth, et de préférence Bluetooth courte portée.

7. Système pour la localisation d'au moins un noeud selon l'une des revendications précédentes, dans lequel les transmissions Low Power Wide Area Network utilisent le protocole de communications LoRa.

8. Système pour la localisation d'au moins un noeud selon l'une des revendications précédentes, comprenant en outre un équipement de supervision (101), la passerelle étant configurée pour retransmettre les identifiants des noeuds détectés et un identifiant de la balise ayant réalisé la détection audit équipement de supervision.

9. Système pour la localisation d'au moins un noeud selon la revendication précédente, dans lequel la passerelle et l'équipement de supervision communiquent à travers une liaison Ethernet.

10. Système pour la localisation d'au moins un noeud selon l'une des revendications précédentes, dans lequel la balise est en outre configurée pour transmettre à la passerelle une mesure d'un niveau de puissance ou d'une qualité du signal reçu depuis le noeud.

11. Système pour la localisation d'au moins un noeud selon l'une des revendications précédentes, dans lequel lesdites informations de configuration relatives aux transmissions entre la balise et la passerelle sont mises à jour en fonction d'une charge du réseau.

12. Balise (110) pour la localisation d'au moins un noeud dans un système de localisation (100) selon l'une des revendications précédentes, comprenant
- des moyens de réception d'un signal transmis par au moins un noeud du système utilisant une transmission courte-portée,
- des moyens de communication utilisant des transmissions de type Low Power Wide Area Network vers une passerelle du système,
la balise étant **caractérisée en ce qu'**elle est configurée pour recevoir depuis ladite passerelle des informations de configuration relatives à un multiplexage des transmissions entre la ou les balises et la ou les passerelles du réseau, et à prendre en compte ces informations de configuration pour transmettre des messages à ladite passerelle.

13. Procédé pour la localisation d'au moins un noeud dans un réseau comprenant au moins une balise et au moins une passerelle, **caractérisé en ce qu'**il comprend les étapes de :
- transmission (401), par la passerelle à destination de la balise, d'informations de configuration relatives à un multiplexage des transmissions entre la ou les balises et la ou les passerelles du réseau, en utilisant une transmission de type Low Power Wide Area Network,
- détection (402), par la balise, de la présence de noeuds du réseau, en utilisant des transmissions courte portée,
- lorsqu'un noeud est détecté, transmission (403) des identifiants des noeuds détectés à la passerelle en utilisant une transmission de type Low Power Wide Area Network, en prenant en compte lesdites informations de configuration.

## Patentansprüche

1. System zur Lokalisierung mindestens eines Knotens (110) in einem Netzwerk, das mindestens ein zum Erkennen der Anwesenheit des Knotens konfiguriertes Beacon (120) und ein Gateway (130) umfasst, wobei:
- das Gateway und das Beacon zum Kommunizieren mittels Übertragungen des Typs Low Power Wide Area Network konfiguriert sind,
- das Beacon zum Erkennen der Anwesenheit von Knoten des Netzwerks mittels Kurzstreckenübertragungen konfiguriert ist,
wobei das System **dadurch gekennzeichnet ist, dass**:
- das Gateway zum Übertragen von Konfigurationsinformationen bezüglich Multiplexen der Übertragungen zwischen dem oder den Beacon(s) und dem oder den Gateway(s) des Netzwerks zu dem Beacon konfiguriert ist,
- das Beacon zum Übertragen von Kennungen der erkannten Knoten zu dem Gateway unter Berücksichtigung der Konfigurationsinformationen konfiguriert ist.

2. System zur Lokalisierung mindestens eines Knotens nach Anspruch 1, wobei die Konfigurationsinformationen eine Information bezüglich einer Uhrzeit und eine Information bezüglich eines Sendezeitpunkts umfassen.

3. System zur Lokalisierung mindestens eines Knotens nach Anspruch 2, wobei das Beacon in in Bezug auf die Konfigurationsinformationen festgelegten Zeitintervallen zum Gateway sendet.

4. System zur Lokalisierung mindestens eines Knotens nach einem der vorhergehenden Ansprüche, wobei die Konfigurationsinformationen eine Sendefrequenz umfassen.

5. System zur Lokalisierung mindestens eines Knotens nach Anspruch 4, wobei das Beacon die Sendefrequenz zum Senden zum Gateway benutzt.

6. System zur Lokalisierung mindestens eines Knotens nach einem der vorhergehenden Ansprüche, wobei die Kurzstreckenübertragungen den Bluetooth-Standard und vorzugsweise Kurzstrecken-Bluetooth benutzen.

7. System zur Lokalisierung mindestens eines Knotens nach einem der vorhergehenden Ansprüche, wobei die Low Power Wide Area Network Übertragungen das LoRa-Kommunikationsprotokoll benutzen.

8. System zur Lokalisierung mindestens eines Knotens nach einem der vorhergehenden Ansprüche, das ferner eine Überwachungsausrüstung (101) umfasst, wobei das Gateway zum erneuten Übertragen der Kennungen der erkannten Knoten und einer Kennung des Beacons, das die Erkennung durchgeführt hat, zur Überwachungsausrüstung konfiguriert ist.

9. System zur Lokalisierung mindestens eines Knotens nach dem vorhergehenden Anspruch, wobei das Gateway und die Überwachungsausrüstung über eine Ethernet-Verbindung kommunizieren.

10. System zur Lokalisierung mindestens eines Knotens nach einem der vorhergehenden Ansprüche, wobei das Beacon ferner zum Übertragen eines Messwertes eines Leistungspegels oder einer Qualität des von dem Knoten empfangenen Signals zu dem Gateway konfiguriert ist.

11. System zur Lokalisierung mindestens eines Knotens nach einem der vorhergehenden Ansprüche, wobei die Konfigurationsinformationen bezüglich der Übertragungen zwischen dem Beacon und dem Gateway in Abhängigkeit von einer Netzauslastung aktualisiert werden.

12. Beacon (110) zur Lokalisierung mindestens eines Knotens in einem Lokalisierungssystem (100) nach einem der vorhergehenden Ansprüche, das Folgendes umfasst:
- Mittel zum Empfangen eines Signals, das von mindestens einem Knoten des Systems mittels Kurzstreckenübertragung übertragen wird,
- Kommunikationsmittel, die Übertragungen vom Typ Low Power Wide Area Network zu einem Gateway des Systems benutzen,
wobei das Beacon **dadurch gekennzeichnet ist, dass** es zum Empfangen, von dem Gateway, von Konfigurationsinformationen bezüglich Multiplexen der Übertragungen zwischen dem oder den Beacon(s) und dem oder den Gateway(s) des Netzwerks und zum Berücksichtigen dieser Konfigurationsinformationen zum Übertragen von Nachrichten zum Gateway konfiguriert ist.

13. Verfahren zur Lokalisierung mindestens eines Knotens in einem Netzwerk, das mindestens ein Beacon und mindestens ein Gateway umfasst, **dadurch gekennzeichnet, dass** es die folgenden Schritte umfasst:
- Übertragen (401), durch das Gateway zu dem Beacon, von Konfigurationsinformationen bezüglich Multiplexen der Übertragungen zwischen dem oder den Beacon(s) und dem oder den Gateway(s) des Netzwerks mittels einer Übertragung vom Typ Low Power Wide Area Network,
- Erkennen (402), durch das Beacon, der Anwesenheit von Knoten des Netzwerks mittels Kurzstreckenübertragungen,
- Übertragen (403), wenn ein Knoten erkannt wird, der Kennungen der erkannten Knoten zu dem Gateway mittels einer Übertragung vom Typ Low Power Wide Area Network unter Berücksichtigung der Konfigurationsinformationen.

## Claims

1. A system for locating at least one node (110) in a network comprising at least one beacon (120) configured to detect the presence of said node, and a gateway (130), wherein:
- the gateway and the beacon are configured to communicate using Low Power Wide Area Network type transmissions;
- the beacon is configured to detect the presence of nodes of the network using short-range transmissions;
the system being **characterised in that**:
- the gateway is configured to transmit configuration information to the beacon that relates to the multiplexing of the transmissions between the one or more beacon(s) and the one or more gateway(s) of the network;
- the gateway is configured to transmit identifiers of the detected nodes to the gateway taking into account said configuration information.

2. The system for locating at least one node according to claim 1, wherein the configuration information comprises information relating to a time and information relating to a transmission instant.

3. The system for locating at least one node according to claim 2, wherein the beacon transmits to the gateway within time intervals that are defined relative to said configuration information.

4. The system for locating at least one node according to any of the preceding claims, wherein said configuration information comprises a transmission frequency.

5. The system for locating at least one node according to claim 4, wherein the beacon uses said transmission frequency to transmit to the gateway.

6. The system for locating at least one node according to any of the preceding claims, wherein the short-range transmissions use the Bluetooth standard, and preferably short-range Bluetooth.

7. The system for locating at least one node according to any of the preceding claims, wherein the Low Power Wide Area Network transmissions use the LoRa communications protocol.

8. The system for locating at least one node according to any of the preceding claims, further comprising an item of monitoring equipment (101), with the gateway being configured to retransmit the identifiers of the detected nodes and an identifier of the beacon that performed detection to said monitoring equipment.

9. The system for locating at least one node according to the preceding claim, wherein the gateway and the monitoring equipment communicate through an Ethernet link.

10. The system for locating at least one node according to any of the preceding claims, wherein the beacon is further configured to transmit a measurement of a power level or a quality of the signal received from the node to the gateway.

11. The system for locating at least one node according to any of the preceding claims, wherein said configuration information relating to the transmissions between the beacon and the gateway is updated as a function of a load of the network.

12. Beacon (110) for locating at least one node in a locating system (100) according to any of the preceding claims, comprising:
- means for receiving a signal transmitted by at least one node of the system using a short-range transmission;
- communication means using Low Power Wide Area Network type transmissions to a gateway of the system;
the beacon being **characterised in that** it is configured to receive configuration information from said gateway relating to the multiplexing of the transmissions between the one or more beacon(s) and the one or more gateway(s) of the network, and to take into account this configuration information for transmitting messages to said gateway.

13. A method for locating at least one node in a network comprising at least one beacon and at least one gateway, **characterised in that** it comprises the following steps:
- transmitting (401), by the gateway to the beacon, configuration information relating to the multiplexing of the transmissions between the one or more beacon(s) and the one or more gateway(s) of the network, using a Low Power Wide Area Network type transmission;
- detecting (402), by the beacon, the presence of nodes of the network, using short-range transmissions;
- transmitting (403), when a node is detected, the identifiers of the detected nodes to the gateway using a Low Power Wide Area Network type transmission, taking into account said configuration information.
